# EUROPEAN PATENT APPLICATION

(11) **EP 4 245 604 A1**
(43) Date of publication of application: **20.09.2023**
(21) Application number: 22161842.4
(22) Date of filing: 14.03.2022
(51) Int. Cl.: B60N 2/847, B60N 2/844

(54) **HEADREST, SEAT, VEHICLE AND METHOD FOR ADJUSTING A POSITION OF A HEADREST**

(71) Applicant: VOLVO TRUCK CORPORATION, 405 08 Göteborg (SE)
(72) Inventor: L, Smruthi, 560059 BANGALORE (IN)
(74) Representative: Plasseraud IP

(57) **Abstract**

Headrest (10) comprising:
- a mounting part (11),
- a resting part (20) comprising a frame (21) mounted on the mounting part (11) in a rotatable manner about a pivot axis (P) between a forward most position and a rearward most position,
- a locking device (30) comprising a control rod (31) configured to be actuated by a user so as to move between a locked position in which the resting part (20) is prevented from moving with respect to the mounting part (11), and an adjustment position in which the resting part (20) is allowed to move with respect to the mounting part (11),
- an urging device (45) configured to urge the resting part (20) is towards the forward most position.

## Description

### Technical Field

This disclosure relates to a headrest, a seat, a vehicle and a method for adjusting a position of a headrest.

The disclosure specifically applies to headrests for seats of heavy-duty vehicles such as trucks, buses and construction equipment, but also of other vehicles such as railway vehicles (trains, tramways, etc.), military vehicles, aircraft and helicopters.

### Background Art

In addition to comfort of the user, headrests have a safety purpose to prevent or at least limit whiplash injuries.

Whiplash is an injury of the cervical spine soft tissue, caused by the sudden acceleration of the head relative to the torso, which occurs during a rear-end collision, mostly occurring at low impact velocities, typically less than 20 km/h. Injury statistics indicate that almost every fourth injury to car occupants is related to rear-end collisions, with three quarters of these injuries being in the neck. Although officially classed as a minor injury, whiplash can lead to long, painful, and debilitating symptoms for many years following the collision. In addition to these damages to the victims, whiplash injuries also have economic consequences in the healthcare system.

Headrest geometry, specifically headrest height and horizontal distance 'setback' from the user's head can have a significant influence on the likelihood and severity of a whiplash injury in rear impact collisions.

A headrest providing full satisfaction in terms of comfort and safety is disclosed in document WO 2021/023730. The headrest comprises:
- a mounting part configured to be secured to the upper part of the backrest,
- a resting part configured to receive the head of the user, the resting part comprising a frame mounted on the mounting part in a rotatable manner about a pivot axis between a forward most position and a rearward most position,
- a locking device comprising a control rod configured to be actuated by the user so as to move between a locked position in which the resting part is prevented from moving with respect to the mounting part, and an adjustment position in which the resting part is allowed to move with respect to the mounting part.

### Summary

This disclosure aims at improving such headrest.

It is proposed a headrest for a seat of a vehicle, the seat comprising a sitting part and a backrest extending from the sitting part to an upper part, the sitting part and the backrest being configured to receive a user, the headrest comprising:
- a mounting part configured to be secured to the upper part of the backrest,
- a resting part configured to receive the head of the user, the resting part comprising a frame mounted on the mounting part in a rotatable manner about a pivot axis between a forward most position and a rearward most position,
- a locking device comprising a control rod configured to be actuated by the user so as to move between a locked position in which the resting part is prevented from moving with respect to the mounting part, and an adjustment position in which the resting part is allowed to move with respect to the mounting part,
- an urging device configured to urge the resting part is towards the forward most position.

With these provisions, the adjustment of the headrest begins from the forward most position where the resting part of the headrest is the closest from the head of the user. It is hence ensured that the resting part is adjusted in a simple an intuitive manner to the best position both in terms of comfort and safety.

The urging device may comprise an elastically deformable member arranged between the mounting part and the resting part to elastically return the resting part towards the forward most position.

The elastically deformable member may be a tension spring having opposite ends attached respectively to anchoring elements of the mounting part and the resting part, the anchoring elements being spaced apart of a distance, the distance being minimum when the resting part is in the forward most position and increasing as the resting part is moved towards the rearward most position.

The control rod may be mounted on the resting part so as to move along with the resting part in rotation about the pivot axis, the control rod being movable with respect to the resting part between the locked position in which the control rod has a contact surface in contact with an abutment surface of the mounting part, and the adjustment position in which the contact surface of the control rod is spaced apart from the abutment surface of the mounting part.

The contact surface of the control rod may run along an arcuate path as the resting part is moved between the forward most position and the rearward most position, and the mounting part may comprise a plurality of separate abutment surfaces spaced apart from each other and arranged in correspondence with the arcuate path of the contact surface, the plurality of separate abutment surfaces comprising at least two end abutment surfaces defining respectively the forward most position and the rearward most position, and at least one intermediate abutment surface defining an intermediate position between the forward most position and the rearward most position.

The locking device may comprise a slot arranged on the mounting part, the slot including at least three adjacent through-openings each bearing one of the abutment surfaces, and arcuate connection portions each connecting two through-openings with each other, the control rod extending through the slot and presenting a locking portion bearing the contact surface and configured to enter any of the though-openings and not to enter any of the arcuate connection portions, and an adjusting potion configured to enter any of the arcuate connection portions, the control rod having the locking portion engaged within one of the though-openings in the locked position and the adjusting portion arranged in the slot in the adjustment position.

The control rod may extend along a central axis and is movable in translation along the central axis with respect to the resting part, the locking and adjusting portions being adjacent along the central axis.

The control rod may be urged towards the locked position.

In another aspect, it is proposed a seat comprising a sitting part and a backrest extending from the sitting part to an upper part, the sitting part and the backrest being configured to receive a user, the seat further comprising a headrest as defined previously, the mounting part being secured to the upper part of the backrest.

In another aspect, it is proposed a vehicle comprising a seat as defined previously.

In another aspect, it is proposed a method for adjusting a position of a headrest of a seat as defined previously, the sitting part and the backrest of the seat receiving a user, the control rod being in the locked position, the method comprising:
- placing the control rod in the adjustment position, the resting part being urged towards the forward most position,
- while the control rod is in the adjustment position, moving the resting part towards the rearward most,
- placing the control rod in the locked position when a desired position is reached.

### Brief Description of Drawings

Other features, details and advantages will be shown in the following detailed description and on the figures, on which:
- figure 1 is a view in perspective of a vehicle comprising a seat with a headrest according to an embodiment of the invention,
- figure 2 is a view in elevation of the headrest secured to an upper part of a backrest of the seat of the vehicle of figure 1,
- figure 3 is a top view of a part of the headrest illustrating a resting part pivotally mounted on a mounting part, and a locking device comprising a control rod mounted on the resting part, the control rod being in a locked position in which the resting part is prevented from moving with respect to the mounting part, the resting part being in a rearward most position,
- figure 4 is a bottom view in perspective of the part of the headrest of figure 4, illustrating an urging device configured to urge the resting part is towards the forward most position,
- figure 5 is a front view in perspective of the part of the headrest of figure 4, illustrating a slot of the locking device arranged on the mounting part,

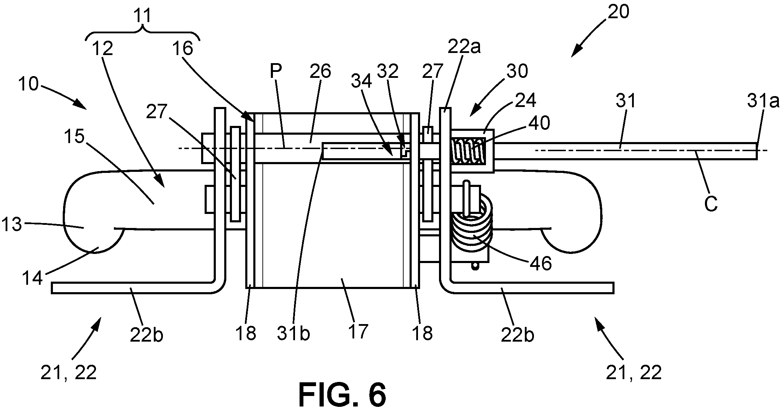

- figure 6 is a top view of the part of the headrest of figure 4, illustrating the control rod being in an adjustment position in which the resting part is allowed to move with respect to the mounting part,
- figures 7 to 11 are views of steps of a method for adjusting a position of the headrest, figures 7 and 8 illustrating the control rod in the adjustment position and the resting part urged towards a forward most position by the urging device, figures 9 and 10 illustrating the control rod in the adjustment position and the resting part moved towards the rearmost position, and figure 11 illustrating the control rod in the locked position as the resting part has reached a desired intermediate position.

### Description of Embodiments

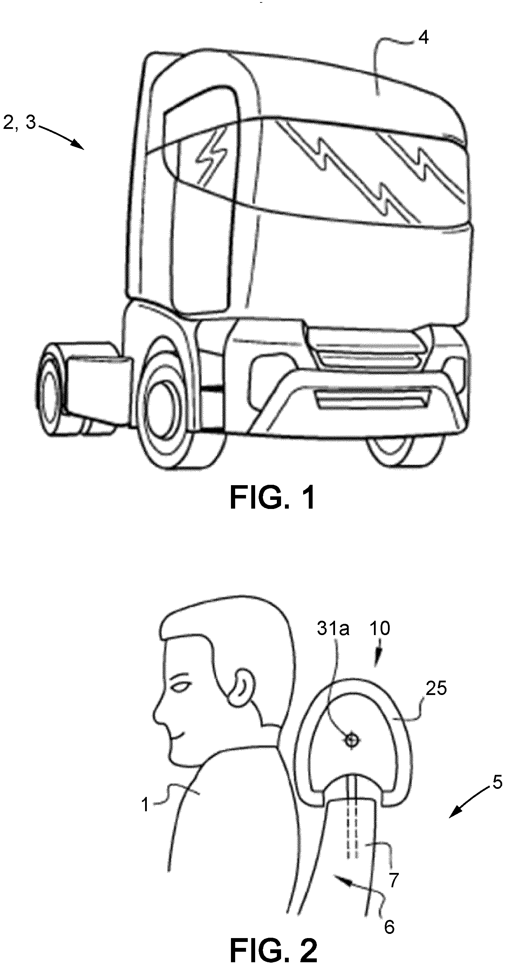

Figure 1 shows a vehicle 2, in particular a truck 3, provided with a cabin 4 within which a seat 5 is arranged. The invention is not limited to a truck 3 and applies to any type of vehicle 2, such as passenger cars, buses, construction machinery, railway vehicles (trains, trams, etc.), military vehicles, as well as aircraft and helicopters and others.

The seat 5, partly represented in figure 2, comprises a sitting part and a backrest 6 extending from the sitting part to an upper part 7. The sitting part and the backrest 6 are configured to receive a user 1, especially a driver of the vehicle or a passenger. The seat 5 further comprises a headrest 10 on which the head of the user 1 may rest.

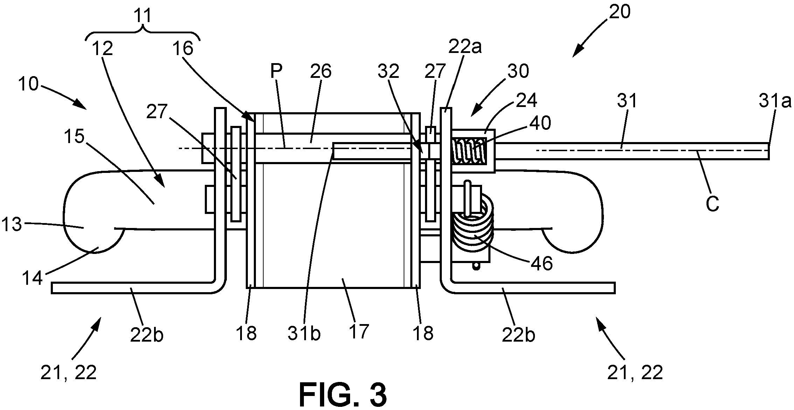

As shown in figures 3 to 5, the headrest 10 comprise a mounting part 11 configured to be secured to the upper part 7 of the backrest 6.

The mounting part 11 includes a support 12, for example made of metal. In the represented embodiment, the support 12 presents an inverted U shape. It includes two parallel rods 13 having free bottom ends 14 intended to be inserted within in the upper part 7 of the backrest 6 possibly through a height adjustment arrangement. Upper ends of the rods 13, opposite the free bottom ends 14, are connected to each other by a crossbar 15.

The mounting part 11 also includes a bracket 16, for example made of metal, attached to the support 12. In the represented embodiment, the bracket 16 presents a U shape with a base 17 fixed in any suitable manner, for example welded, to the crossbar 15 of the support 12, and two walls 18 extending parallel to each other, from the base 17, in a direction opposite the support 12.

The headrest 10 also comprises a resting part 20 configured to receive the head of the user 1.

The resting part 20 comprises a frame 21 mounted on the mounting part 11 in a rotatable manner about a pivot axis P between a forward most position and a rearward most position.

In the represented embodiment, the frame 21 includes two distinct wings 22 facing respectively outer surfaces of the walls 18 of the bracket 16. Each of the wings 22 is L-shaped with a first branch 22a parallel to the wall 18 of the bracket 16 and a second branch 22b extending perpendicularly to the first branch 22a away from the wall 18 of the bracket 16. The wings 22 are arranged so as to present front surfaces on their second branches 22b extending vertically when the resting part 20 is in the rearward most position.

The resting part 20 comprises shaft 26 extending along the pivot axis P and rotatably mounted on the walls 18 of the bracket 16. Each of the wings 22 has an anchoring element 23 to which an end of a link 27 is fitted while another end of the link 27 is fitted on the shaft 26. In doing so, the wings 22, the shaft 26 and the links 27 rotate all together about the pivot axis P with respect to the mounting part 11.

The frame 21 of the resting part 20 may by covered by a cushion 25 to ensure comfort of the user 1.

In order to control adjustment of the position of the headrest 10 between the forward most position and the rearward most position, the headrest 10 comprises a locking device 30 in which a control rod 31 is configured to be actuated by the user so as to move between a locked position in which the resting part 20 is prevented from moving with respect to the mounting part 11, and an adjustment position in which the resting part 20 is allowed to move with respect to the mounting part 11.

The control rod 31 is straight and extends along a central axis C between a first end 31a, intended to be flush with an outer surface of the cushion 25 to enable actuation by the user 1, and a second end 31a. At a vicinity of the second end 31a, the control rod 31 presents an adjusting portion 32 having a cross-section that differs from the cross-section of the remaining of the control rod 31. In particular, the cross-section of the adjusting portion 32 is reduced with respect to that of the remaining of the control rod 31, and especially at least with respect to portions adjacent the adjusting portion 32. In the illustrated embodiment, the cross-section of the control rod 31 is circular except for the adjusting portion 32 where two diametrically opposite notches are formed. The adjusting portion 32 hence presents two parallel flats 33 providing an oblong cross-section with two straight long sides and two arcuate short sides. Adjacent the adjusting portion 32 towards the second end 31b, the control rod 31 presents a locking portion 34 which has the same cross-section as that of the remaining of the control rod 31.

The arrangement and conformation of the locking 34 and adjusting 32 portions of the control rod 31 are adapted to the way the locking device 30 operates in the disclosed embodiment, as it will become apparent from the following of the description. In variants where the locking device 30 would operate in a different way, the arrangement and conformation of the locking 34 and adjusting 32 portions of the control rod 31 could be adapted accordingly.

The control rod 31 is mounted on the resting part 20 so as to move along with the resting part in rotation about the pivot axis. In the illustrated embodiment, a wing bracket 24 is secured to an outer surface, opposite the wall 18 of the bracket 16 of the mounting part 11, of the first branch 22a of one of the wings 22 of the frame 21. The control rod is mounted on the wing bracket and through the first branch of the wing so as to be movable with respect to the resting part in translation along its central axis.

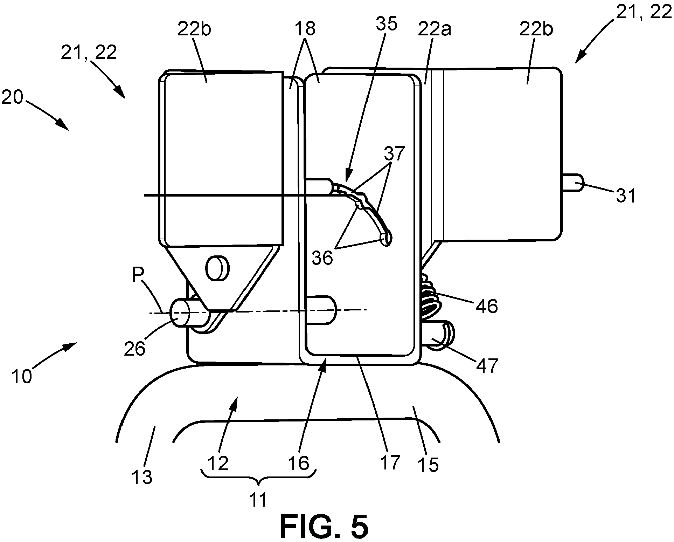

As shown in figure 5, the wall 18 of the bracket 16 of the mounting part 11 facing the first branch 22a of the wing 22 carrying the control rod 31 comprises a slot 35 through which the control rod 31 extends. The slot 35 is globally arcuate with a radius corresponding to a radius of an arcuate path around the pivot axis P along which the control rod 31 runs as the resting part 20 is moved between the forward most position and the rearward most position.

In the represented embodiment, the slot 35 includes three adjacent through-openings 36 and arcuate connection portions 37 each connecting two through-openings 36 with each other. Each of the through-openings 36 is configured to receive the locking portion 34 of the control rod 31 whereas each of the arcuate connection portion is configured to receive the adjusting portion 32 of the control rod 31 but not the locking portion 34.

In the locked position, the control rod 31 engages any of the through-openings 36 of the mounting part 11 so as to have a contact surface, arranged peripherically on the locking portion 34, in contact with an abutment surface, borne internally by the through-opening 36, thereby preventing the resting part 20 from pivoting. The through-openings 36 hence define a plurality of separate abutment surfaces spaced apart from each other and arranged in correspondence with the arcuate path of the contact surface of the locking portion 34 of the control rod 31. In the represented embodiment, the plurality of separate abutment surfaces comprises two end abutment surfaces, defining respectively the forward most position and the rearward most position, and one intermediate abutment surface defining an intermediate position between the forward most position and the rearward most position. In variants, any suitable number of intermediate positions could be defined through the arrangement of any corresponding number of intermediate abutment surfaces.

In the adjustment position, the contact surface of the locking portion 34 of the control rod 31 is spaced apart from the abutment surface of the mounting part 11, and the adjusting portion 32 of the control rod 31 is engaged in the slot 35. The adjusting portion 32 of the control rod 31 may then slide freely in the slot 35 of the mounting part 11 as the resting part 20 is pivoted.

As indicated previously, the control rod 31 is moved in translation along its central axis C between the locked and adjustment positions. Advantageously, the control rod 31 is urged towards the locked position. To that end, the locking device 30 comprises a return member, in the form of a compression spring 40, arranged in the wing bracket 24, between the first branch 22a of the wing 22 and a flange on the control rod 31, so that in an extended state to which it is elastically returned, the control rod 31 is in the locked position, and in a compressed state, the control rod 31 is in the adjusting position.

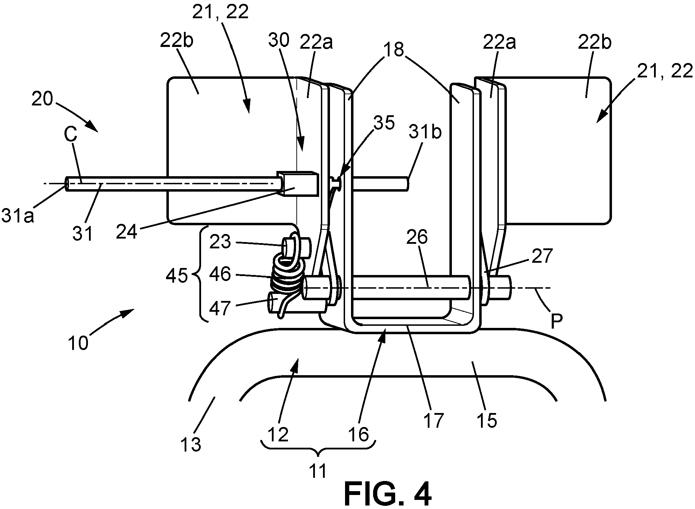

As visible in figures 3 and 4, the headrest 10 further comprises an urging device 45 configured to urge the resting part 20 towards the forward most position. The urging device 45 comprises an elastically deformable member arranged between the mounting part 11 and the resting part 20 to elastically return the resting part 20 towards the forward most position. More specifically, the elastically deformable member is a tension spring 46 having opposite ends attached respectively to the anchoring element 23 of the wing 22 of the resting part 20 and to an anchoring element 47 arranged on an outer surface of the bracket 16 of the mounting part 11. The anchoring elements 23, 47 of the wing 22 and the bracket 16 are spaced apart of a distance which is minimum when the resting part 20 is in the forward most position and which increases as the resting part 20 is moved towards the rearward most position. As a consequence, when the resting part 20 is spaced apart from the forward most position, the tension spring 46 extends and exerts a return force on the resting part 20. As soon as the resting part 20 is free of any external force, including a force exerted by the control rod 31 in the locked position, it is returned to the forward most position by the tension spring 46.

In relation with figures 2 and 7 to 11, a method for adjusting a position of the headrest 10 is now disclosed.

As shown in figure 2, the user 1 sits on the seat 5 with the headrest 10 in an initial position, the control rod 31 is in the locked position with the contact surface of its locking portion 34 against the abutment surface of one of the through-openings 36.

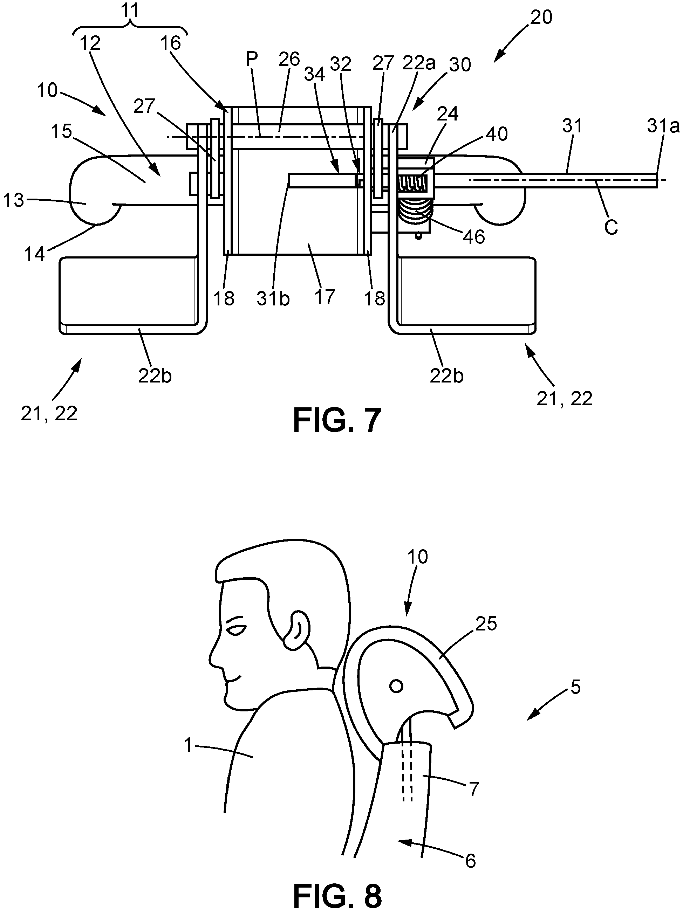

To adjust the position of headrest 10, the user 1 actuates the control rod 31 by pushing its first end 31a. The control rod 31 translates along its central axis C to its adjustment position where its adjusting portion 32 faces the arcuate connection portion 37. Under the effect of the tension spring 46 of the urging device 45, the adjusting portion 32 enters the arcuate connection portion 37 and any subsequent through-opening 36 or arcuate connection portion 37 until the resting part 20 reaches the forward most position as shown in figures 7 and 8.

The user 1 may release the control rod 31 which is returned to the locked position with the locking portion 34 engaged within the corresponding through-opening 36.

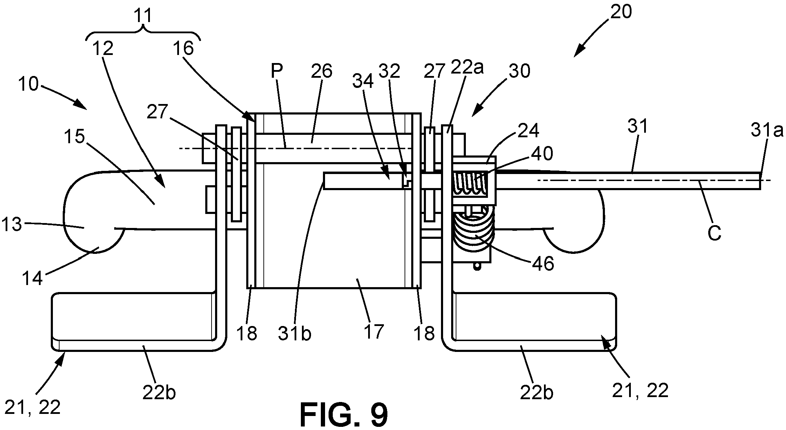

If the user 1 wants the headrest 10 to be in the intermediate position, he keeps on pushing the control rod 31 or push it once again so that it reaches the adjustment position with the adjusting portion 32 facing the arcuate connection portion 37, as shown in figure 9.

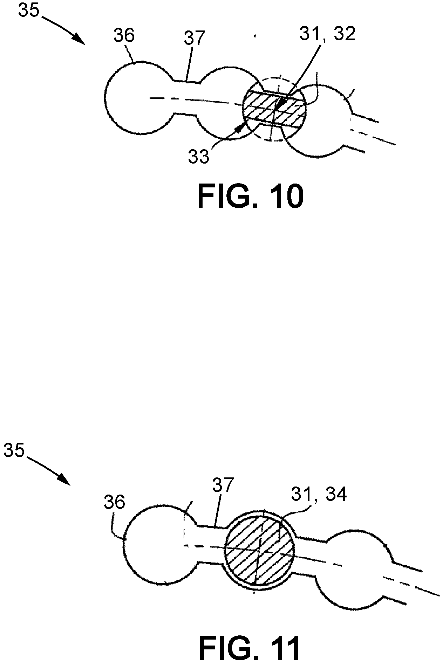

In figure 10, the user 1 can act on the resting part 20 especially by pushing it rearward with his head so that the adjusting portion 32 runs in the arcuate connection portion 37.

In figure 11, as soon as the intermediate position is reached, the user 1 releases the control rod 31 which returns to the locked position with its locking portion 34 engaged within the corresponding through-opening 36.

## Claims

1. Headrest (10) for a seat (5) of a vehicle (2), the seat comprising a sitting part and a backrest (6) extending from the sitting part to an upper part (7), the sitting part and the backrest (6) being configured to receive a user (1), the headrest (10) comprising:
- a mounting part (11) configured to be secured to the upper part (7) of the backrest (6),
- a resting part (20) configured to receive the head of the user (1), the resting part (20) comprising a frame (21) mounted on the mounting part (11) in a rotatable manner about a pivot axis (P) between a forward most position and a rearward most position,
- a locking device (30) comprising a control rod (31) configured to be actuated by the user (1) so as to move between a locked position in which the resting part (20) is prevented from moving with respect to the mounting part (11), and an adjustment position in which the resting part (20) is allowed to move with respect to the mounting part (11),
the headrest (10) being **characterized in that** said headrest (10) further comprises an urging device (45) configured to urge the resting part (20) is towards the forward most position.

2. Headrest (10) according to claim 1, wherein the urging device (45) comprises an elastically deformable member arranged between the mounting part (11) and the resting part (20) to elastically return the resting part (20) towards the forward most position.

3. Headrest (10) according to claim 2, wherein the elastically deformable member is a tension spring (46) having opposite ends attached respectively to anchoring elements (23, 47) of the mounting part (11) and the resting part (20), the anchoring elements (23, 47) being spaced apart of a distance, the distance being minimum when the resting part (20) is in the forward most position and increasing as the resting part (20) is moved towards the rearward most position.

4. Headrest (10) according to any of claims 1 to 3, wherein the control rod (10) is mounted on the resting part (20) so as to move along with the resting part in rotation about the pivot axis (P), the control rod (31) being movable with respect to the resting part (20) between the locked position in which the control rod (31) has a contact surface in contact with an abutment surface of the mounting part (11), and the adjustment position in which the contact surface of the control rod (31) is spaced apart from the abutment surface of the mounting part (11).

5. Headrest (10) according to claim 4, wherein the contact surface of the control rod (10) runs along an arcuate path as the resting part (20) is moved between the forward most position and the rearward most position, and the mounting part (11) comprises a plurality of separate abutment surfaces spaced apart from each other and arranged in correspondence with the arcuate path of the contact surface, the plurality of separate abutment surfaces comprising at least two end abutment surfaces defining respectively the forward most position and the rearward most position, and at least one intermediate abutment surface defining an intermediate position between the forward most position and the rearward most position.

6. Headrest (10) according to claim 5, wherein the locking device (30) comprises a slot (35) arranged on the mounting part (11), the slot (35) including at least three adjacent through-openings (36) each bearing one of the abutment surfaces, and arcuate connection portions (37) each connecting two through-openings (36) with each other, the control rod (31) extending through the slot (35) and presenting a locking portion (34) bearing the contact surface and configured to enter any of the though-openings (36) and not to enter any of the arcuate connection portions (37), and an adjusting potion (32) configured to enter any of the arcuate connection portions (37), the control rod (31) having the locking portion (34) engaged within one of the though-openings (36) in the locked position and the adjusting portion (32) arranged in the slot (35) in the adjustment position.

7. Headrest (10) according to claim 6, wherein the control rod (31) extends along a central axis (C) and is movable in translation along the central axis (C) with respect to the resting part (20), the locking (34) and adjusting (32) portions being adjacent along the central axis (C).

8. Headrest (10) according to any of claims 1 to 7, wherein the control rod (31) is urged towards the locked position.

9. Seat (5) comprising a sitting part and a backrest (6) extending from the sitting part to an upper part (7), the sitting part and the backrest (6) being configured to receive a user (1), the seat (5) further comprising a headrest (10) according to any of claims 1 to 8, the mounting part (11) being secured to the upper part (7) of the backrest (6).

10. Vehicle (2) comprising a seat (5) according to claim 9.

11. Method for adjusting a position of a headrest (10) of a seat (5) according to claim 8, the sitting part and the backrest (6) of the seat (5) receiving a user (1), the control rod (31) being in the locked position, the method comprising:
- placing the control rod (31) in the adjustment position, the resting part (20) being urged towards the forward most position,
- while the control rod (31) is in the adjustment position, moving the resting part (20) towards the rearward most,
- placing the control rod (31) in the locked position when a desired position is reached.
